# EUROPEAN PATENT APPLICATION

(11) **EP 4 611 116 A1**
(43) Date of publication of application: **03.09.2025**
(21) Application number: 23882518.6
(22) Date of filing: 18.10.2023
(51) Int. Cl.: H01M 10/54, C22B 1/00, C22B 1/02, C22B 3/22, C22B 7/00, C22B 23/00

(54) **METHOD FOR RECOVERING VALUABLE MATERIALS FROM LITHIUM ION SECONDARY BATTERIES**

(30) Priority: 25.10.2022 JP 2022170534
(71) Applicant: Dowa Eco-System Co., Ltd., Tokyo 101-0021 (JP)
(72) Inventor: LIU, Changzhi, Tokyo 101-0021 (JP); WATANABE, Ryoei, Tokyo 101-0021 (JP); TAHATA, Shota, Tokyo 101-0021 (JP); NISHIKAWA, Chihiro, Tokyo 101-0021 (JP); YOSHIDA, Shohei, Tokyo 101-0021 (JP)
(74) Representative: Müller-Boré & Partner Patentanwälte PartG mbB
(86) International application number: PCT/JP2023/037752
(87) International publication number: WO 2024/090313

(57) **Abstract**

A method for recovering valuable materials from lithium ion secondary batteries is provided. The method includes: a heat-treatment step of performing a heat treatment on a lithium ion secondary battery to obtain a heat-treated product; a first classification step of classifying a crushed product, which is obtained by crushing the heat-treated product, to obtain a coarse-particle product 1 and a small-particle product; a second classification step of classifying a ground product, which is obtained by grinding the small-particle product, at a classification point smaller than a classification point of the first classification step to obtain a coarse-particle product 2 and a fine-particle product; a first magnetic separation step of subjecting the fine-particle product obtained in the second classification step to magnetic separation to obtain a magnetic component 1 and a non-magnetic component 1; a second magnetic separation step of subjecting the non-magnetic component 1 obtained in the first magnetic separation step to magnetic separation to obtain a magnetic component 2 and a non-magnetic component 2; and a recovering step of recovering valuable materials from the magnetic component 1 and the magnetic component 2.

## Description

### TECHNICAL FIELD

The present invention relates to methods for recovering valuable materials from lithium ion secondary batteries.

### BACKGROUND ART

Lithium ion secondary batteries are secondary batteries which are lighter in weight, higher in capacity, and higher in electromotive force than lead storage batteries, nickel-cadmium secondary batteries, and the like available in the related art. Lithium ion secondary batteries are used as secondary batteries for personal computers, electric vehicles, portable devices, and the like. For example, valuable materials, such as cobalt, nickel, and the like, are used as lithium cobalt oxide (LiCoO₂), a ternary positive-electrode material (LiNiₓCo_{y}Mn_{z}O₂ (x + y + z = 1)), and the like in a positive electrode of a lithium ion secondary battery.

Since use of lithium ion secondary batteries is expected to increase in the future, it is desired, in view of recycling of resources, to recover valuable materials, such as lithium and the like, from defective lithium ion secondary batteries produced during production processes, or lithium ion secondary batteries discarded due to end of the service life of devices using the batteries or end of the service life of the batteries. When valuable materials, such as lithium and the like, are recovered from lithium ion secondary batteries, it is important to separately recover various metals and impurities used in the lithium ion secondary batteries for increasing the value of recovered products.

As a method of recovering valuable materials, such as cobalt, nickel and the like, from a crushed product of a heat-treated product of a lithium ion secondary battery, for example, there is proposed a method for recovering valuable materials from lithium ion secondary batteries, in which a heat-treated product obtained by performing a heat treatment on a lithium ion secondary battery is crushed and classified to obtain small-particle product, followed by performing wet magnetic separation on the small-particle product (see, for example, Patent Document 1).

### CITATION LIST

### PATENT LITERATURE

Patent Document 1: Japanese Patent No. 6948481

### SUMMARY OF THE INVENTION

### TECHNICAL PROBLEM

However, the method of recovering valuable materials described in Patent Document 1 could not achieve a high recovery rate when a cobalt content and a nickel content are low. Specifically, there is the following problem. Particle growth of cobalt metal particles and nickel metal particles does not readily progress in a small-particle product (may be referred to as a "black mass" hereinafter) having a low cobalt content and a low nickel content (a sum of the cobalt content and the nickel content being 30% or less). Thus, the cobalt metal particles and the nickel metal particles have small average particle diameters so that the cobalt metal particles and the nickel metal particles are mixed and incorporated into a non-magnetic component in a wet magnetic separation step, thereby generating losses of the cobalt metal particles and the nickel metal particles.

The present invention aims to solve various problems existing in the related art, and to achieve the following object. Specifically, an object of the present invention is to provide a method for recovering valuable materials from lithium ion secondary batteries, which can achieve high recovery rates of cobalt and nickel even when a magnetic separation target has a low cobalt content and a low nickel content.

### Solution to Problem

Means for solving the above problems are as follows.
<1> A method for recovering valuable materials from lithium ion secondary batteries, the method including:
   a heat-treatment step of performing a heat treatment on a lithium ion secondary battery to obtain a heat-treated product;
   a first classification step of classifying a crushed product, which is obtained by crushing the heat-treated product, to obtain a coarse-particle product 1 and a small-particle product;
   a second classification step of classifying a ground product, which is obtained by grinding the small-particle product, at a classification point smaller than a classification point of the first classification step to obtain a coarse-particle product 2 and a fine-particle product;
   a first magnetic separation step of subjecting the fine-particle product obtained in the second classification step to magnetic separation to obtain a magnetic component 1 and a non-magnetic component 1;
   a second magnetic separation step of subjecting the non-magnetic component 1 obtained in the first magnetic separation step to magnetic separation to obtain a magnetic component 2 and a non-magnetic component 2; and
   a recovering step of recovering valuable materials from the magnetic component 1 and the magnetic component 2.
<2> The method for recovering valuable materials from lithium ion secondary batteries according to <1>,
   wherein the classifying of the first classification step is performed at the classification point of 600 µm or larger and 2,400 µm or smaller.
<3> The method for recovering valuable materials from lithium ion secondary batteries according to <1> or <2>,
   wherein the classifying of the second classification step is performed at the classification point of 25 µm or larger and 1,700 µm or smaller.
<4> The method for recovering valuable materials from lithium ion secondary batteries according to any one of <1> to <3>,
   wherein a magnetic flux density of the magnetic separation in the first magnetic separation step is 1,000 G or greater and less than 3,000 G, and
   a magnetic flux density of the magnetic separation in the second magnetic separation step is 3,000 G or greater and 20,000 G or less.
<5> The method for recovering valuable materials from lithium ion secondary batteries according to any one of <1> to <4>,
   wherein a sum of a cobalt content of the non-magnetic component 1 and a nickel content of the non-magnetic component 1 is 30 percent by mass or less.
<6> The method for recovering valuable materials from lithium ion secondary batteries according to any one of <1> to <5>,
   wherein a number-weighted average particle diameter of cobalt, nickel or both included in the non-magnetic component 1 is 50 µm or smaller.
<7> The method for recovering valuable materials from lithium ion secondary batteries according to any one of <1> to <6>,
   wherein the magnetic separation of the first magnetic separation step, the magnetic separation of the second magnetic separation step, or both are wet magnetic separation.
<8> The method for recovering valuable materials from lithium ion secondary batteries according to <7>,
   wherein the magnetic separation of the second magnetic separation step is wet magnetic separation, and uses a wet high-gradient magnetic separation method.
<9> The method for recovering valuable materials from lithium ion secondary batteries according to <8>,
   wherein the magnetic separation of the second magnetic separation step is wet magnetic separation, and the second magnetic separation step further includes feeding slurry of the non-magnetic component to a rotating drum including a magnet.
<10> The method for recovering valuable materials from lithium ion secondary batteries according to <8> or <9>,
   wherein the magnetic separation of the second magnetic separation step is wet magnetic separation, and uses a wet drum magnetic separation method, in which a magnet is arranged in a 3 o'clock-direction of a drum, slurry of the non-magnetic component 1 is fed from a 12 o'clock-direction to 2 o'clock-direction of the drum, and the drum is rotated in a counterclockwise direction.
<11> The method for recovering valuable materials from lithium ion secondary batteries according to any one of <8> to <10>,
   wherein the second magnetic separation step further includes adding a dispersant to the non-magnetic component 1 obtained in the first magnetic separation step.
<12> The method for recovering valuable materials from lithium ion secondary batteries according to any one of <1> to <11>,
   wherein the recovery step further includes washing the magnetic component 1 and the magnetic component 2, and performing solid-liquid separation to recover the valuable materials.
<13> The method for recovering valuable materials from lithium ion secondary batteries according to any one of <1> to <12>,
   wherein copper is recovered from the coarse-particle product **2.**

### Effects of Invention

According to the present invention, the various problems existing in the related art can be solved, the above object can be achieved, and there can be provided a method for recovering valuable materials from lithium ion secondary batteries, which can achieve high recovery rates of cobalt and nickel even when a magnetic separation target has a low cobalt content and a low nickel content.

### Brief Description of Drawings

[Fig. 1] Fig. 1 is a diagram illustrating one example of a process flow of the method for recovering valuable materials from lithium ion secondary batteries of the present invention.
[Fig. 2] Fig. 2 is a schematic view illustrating one example of a wet drum magnetic separator.
[Fig. 3] Fig. 3 is a schematic view illustrating another example of the wet drum magnetic separator.
[Fig. 4] Fig. 4 is a photograph illustrating one example of a matrix inlet opening of a wet high-gradient magnetic separator.
[Fig. 5] Fig. 5 is a photograph illustrating one example of a matrix container of the wet high-gradient magnetic separator.
[Fig. 6A] Fig. 6A is a diagram illustrating one example of a horizontal matrix.
[Fig. 6B] Fig. 6B is a diagram illustrating one example of a vertical matrix.
[Fig. 7] Fig. 7 is a diagram illustrating one example of a matrix member in which three horizontal matrices and four vertical matrices are alternately stacked.

### Description of Embodiments

### (Method for recovering valuable materials from lithium ion secondary batteries)

The method for recovering the valuable materials from the lithium ion secondary batteries of the present invention includes a heat-treatment step, a first classification step, a second classification step, a first magnetic separation step, a second magnetic separation step, and a recovering step, and may further include other steps, as necessary.

In the present invention, the second magnetic separation step is further performed after performing the first magnetic separation step so that cobalt and nickel that are lost and incorporated into a non-magnetic component in the first magnetic separation step can be recovered as a magnetic component in the second magnetic separation step and therefore high recovery rates of cobalt and nickel are achieved. In particular, even when a sum of a cobalt content and nickel content of a non-magnetic component 1 obtained in the first magnetic separation step is 30 percent by mass or less, or when cobalt, nickel, or both cobalt and nickel included in the non-magnetic component 1 obtained in the first magnetic separation step have a number-weighted average particle diameter of 50 µm or smaller, high recovery rates of cobalt and nickel can be achieved.

The method for recovering the valuable materials from the lithium ion secondary batteries of the present invention is a method of recovering valuable materials from lithium ion secondary batteries serving as a processing target.

In the present specification, the valuable materials encompass materials having trading values and are not to be discarded, and examples of such materials include various metals. Examples of the valuable materials in a lithium ion secondary battery include copper (Cu), aluminum (Al), lithium (Li), cobalt (Co), nickel (Ni), iron (Fe), carbon (C), and the like. Among the above valuable materials, cobalt (Co) and nickel (Ni) are preferred.

### <Lithium ion secondary battery>

The lithium ion secondary battery serving as a processing target is not particularly limited, and may be appropriately selected according to the intended purpose. Examples of the lithium ion secondary battery serving as a processing target include: defective lithium ion secondary batteries produced during the production of lithium ion secondary batteries; lithium ion secondary batteries discarded due to failures in the devices using the lithium ion secondary batteries or the end of life of the devices using the lithium ion secondary batteries; used lithium ion secondary batteries discarded due to the end of life; and the like.

A shape, structure, size, and material of the lithium ion secondary battery are not particularly limited, and may be appropriately selected according to the intended purpose.

The shape of the lithium ion secondary battery is not particularly limited, and may be appropriately selected according to the intended purpose. Examples of the shape of the lithium ion secondary battery include laminate shapes, cylindrical shapes, button shapes, coin shapes, square shapes, flat shapes, and the like.

Moreover, a form of the lithium ion secondary battery is not particularly limited, and may be appropriately selected according to the intended purpose. Examples of the form of the lithium ion secondary battery include battery cells, battery modules, battery packs, and the like. The battery module encompasses a product in which battery cells serving as unit cells are connected and collectively housed in a housing. The battery pack is a product in which the battery modules are collectively housed in a housing. Moreover, the battery pack may include a controller or a cooling device.

Examples of the lithium ion secondary battery include a lithium ion secondary battery including a positive electrode, a negative electrode, a separator, an electrolytic solution including an electrolyte and an organic solvent, and an outer container accommodating the positive electrode, the negative electrode, the separator, and the electrolytic solution, and the like. The lithium ion secondary battery may be in the state in which the positive electrode, the negative electrode, and the like are detached.

### -Positive electrode-

The positive electrode is not particularly limited, as long as the positive electrode includes a positive-electrode active material including cobalt, nickel, or both. The positive electrode may be appropriately selected according to the intended purpose.

A shape of the positive electrode is not particularly limited, and may be appropriately selected according to the intended purpose. Examples of the shape of the positive electrode include flat plate shapes, sheet shapes, and the like.

### --Positive-electrode current collector--

A form, structure, size, material, and the like of the positive-electrode current collector are not particularly limited, and may be appropriately selected according to the intended purpose.

Examples of the form of the positive-electrode current collector include foils and the like.

Examples of the material of the positive-electrode current collector include stainless steel, nickel, aluminum, copper, titanium, tantalum, and the like. Among the above materials, aluminum is preferred.

A positive electrode material is not particularly limited, and may be appropriately selected according to the intended purpose. Examples of the positive electrode material include a positive electrode material that includes at least a positive-electrode active material including lithium, and optionally further includes a conductive agent and a binder resin, and the like.

The positive-electrode active material is not particularly limited, as long as the positive-electrode active material includes cobalt, nickel, and both, and may be appropriately selected according to the intended purpose.

Examples of the positive-electrode active material include lithium manganese oxide (LiMn₂O₄) referred to as LMO, lithium cobalt oxide (LiCoO₂) referred to as LCO, LiNiₓCo_{y}Mn_{z}O₂ (x + y + z = 1) referred to as ternary materials or NCM, LiNiₓCo_{y}Al_{z} (x + y + z = 1) referred to as NCA, lithium iron phosphate (LiFePO₄), lithium cobalt nickel oxide (LiCo_{1/2}Ni_{1/2}O₂), lithium titanium oxide (Li₂TiO₃), and the like. Moreover, as the positive electrode active material, the above materials may be used in combination.

The conductive agent is not particularly limited, and may be appropriately selected according to the intended purpose. Examples of the conductive agent include carbon black, graphite, carbon fibers, metal carbide, and the like.

The binder resin is not particularly limited, and may be appropriately selected according to the intended purpose. Examples of the binder resin include: homopolymers or copolymers of vinylidene fluoride, ethylene tetrafluoride, acrylonitrile, ethylene oxide, and the like; styrene-butadiene rubber; and the like.

### -Negative electrode-

The negative electrode is not particularly limited, as long as the negative electrode includes a negative-electrode active material. The negative electrode may be appropriately selected according to the intended purpose.

A shape of the negative electrode is not particularly limited, and may be appropriately selected according to the intended purpose. Examples of the shape of the negative electrode include flat plate shapes, sheet shapes, and the like.

### --Negative-electrode current collector--

A form, structure, size, material, and the like of the negative-electrode current collector are not particularly limited, and may be appropriately selected according to the intended purpose.

Examples of the form of the negative-electrode current collector include foils, and the like.

Examples of the material of the negative-electrode current collector include stainless steel, nickel, aluminum, copper, titanium, tantalum, and the like. Among the above materials, copper is preferred.

The negative-electrode active material is not particularly limited, and may be appropriately selected according to the intended purpose. Examples of the negative-electrode active material include: carbon materials, such as graphite, hard carbon, and the like; titanate; silicon; and the like. As the negative-electrode active material, the above materials may be used in combination.

Each of the positive-electrode current collector and the negative-electrode current collector has a laminate structure. The laminate is not particularly limited, and may be appropriately selected according to the intended purpose.

### -Outer container-

A material of the outer container (housing) of the lithium ion secondary battery is not particularly limited, and may be appropriately selected according to the intended purpose. Examples of the material include aluminum, iron, stainless steel, resins (plastics), and the like.

Each of the steps in the method for recovering the valuable materials from the lithium ion secondary batteries of the present invention will be described in detail hereinafter.

### <Heat-treatment step>

The heat-treatment step is a step of performing a heat treatment on a lithium ion secondary battery to obtain a heat-treated product. The heat-treated product encompasses a product obtained by performing a heat treatment on a lithium ion secondary battery.

A method of performing the heat treatment in the heat-treatment step is not particularly limited, and may be appropriately selected according to the intended purpose. For example, the heat treatment can be performed by heating a processing target in a roasting furnace available in the related art.

The roasting furnace is not particularly limited, and may be appropriately selected according to the intended purpose. Examples of the roasting furnace include rotary kilns, fluidized bed furnaces, tunnel kilns, batch-type furnaces (e.g., Muffle furnaces), cupola furnaces, stoker furnaces, and the like.

The atmosphere used for the heat treatment is not particularly limited, and may be appropriately selected according to the intended purpose. Examples of the atmosphere include an ambient atmosphere, an inert atmosphere, a reducing atmosphere, a low oxygen atmosphere, and the like.

The ambient atmosphere (air atmosphere) encompasses the atmosphere using the atmospheric gas (air) including approximately 21 percent by volume of oxygen and approximately 78 percent by volume of nitrogen.

Examples of the inert atmosphere include an atmosphere composed of nitrogen or argon.

The reducing atmosphere encompasses, for example, an atmosphere in which CO, H₂, H₂S, SO₂, and the like are included in an inert atmosphere of nitrogen, argon, or the like.

The low oxygen atmosphere encompasses an atmosphere including 11 percent by volume or less of oxygen.

Conditions (heat treatment-conditions) for performing the heat treatment (heating) on a processing target of the heat treatment are not particularly limited, as long as the conditions enable each of the constituent components of the processing target to be separated and become crushable in the below-described crushing and classification steps. The heat-treatment conditions may be appropriately selected according to the intended purpose.

Examples of the heat-treatment conditions include a heat-treatment temperature, duration of the heat treatment, and the like.

The heat-treatment temperature encompasses a temperature of the lithium ion secondary battery that is a processing target of the heat treatment. The heat-treatment temperature can be measured by inserting a thermometer, such as a thermocouple, a thermistor, or the like, into the processing target during the heat treatment.

The temperature during the heat treatment (the heat-treatment temperature) is preferably 400°C or higher and 1,080°C or lower, more preferably 660°C or higher and 1,080°C or lower, and particularly preferably 750°C or higher and 900°C or lower. By setting the heat-treatment temperature at 400°C or higher, cobalt oxide and nickel oxide included in the positive-electrode active material are reduced to metals. In addition, the particles of the above metals can be grown to a particle size at which the metals can be easily separated by magnetic attraction during magnetic separation of a later process. The higher the temperature of the heat treatment is, the more readily growth of the particles in size occurs. By setting the heat-treatment temperature at 660°C or higher, aluminum constituting a LIB pack or an outer case is melted so that the aluminum can be separated from other members and recovered. By setting the heat-treatment temperature at 750°C or higher, lithium, such as Li(Ni/Co/Mn)O₂ included in the positive-electrode active material or LiPF₆ in the electrolyte, can be transformed into a lithium substance that can be soluble in an aqueous solution, such as lithium fluoride (LiF), lithium carbonate (Li₂CO₃), lithium oxide (Li₂O), or the like, so that the lithium can be leached into a dispersion medium during a slurry formation process.

Moreover, a material having a melting point higher than the heat-treatment temperature is preferably used for the outer container of the lithium ion secondary battery.

In the case where a material having a melting point lower than the heat-treatment temperature is used for the outer container of the lithium ion secondary battery, the heat treatment is preferably performed in a low oxygen atmosphere having an oxygen concentration of 11 percent by volume or lower, or in such manner that an oxygen concentration at least inside the lithium-ion secondary battery during roasting (particularly, around the positive-electrode current collector and the negative-electrode current collector disposed inside the outer container of the lithium-ion secondary battery) is to be 11 percent by volume or less.

As a method for achieving the low oxygen atmosphere, for example, the positive electrode or the negative electrode of the lithium ion secondary battery may be placed in an oxygen-shielding container, and the oxygen-shielding container is then subjected to the heat treatment. A material of the oxygen-shielding container is not particularly limited, as long as the material is a material having a melting point equal to or higher than the heat-treatment temperature, and may be appropriately selected according to the intended purpose. In the case where the heat-treatment temperature is 800°C, examples of the material of the oxygen-shielding container include iron, stainless steel, and the like.

In order to release the gas pressure generated by combustion of the electrolytic solution in the lithium ion secondary battery or laminate, an opening is preferably formed in the oxygen-shielding container. An area of the opening is preferably 12.5% or smaller relative to a surface area of the outer container in which the opening is formed. The area of the opening is more preferably 6.3% or smaller relative to the surface area of the outer container in which the opening is formed. A shape, size, location, and the like of the opening are not particularly limited, and may be appropriately selected according to the intended purpose.

Duration of the heat treatment of the lithium ion secondary battery is not particularly limited, and may be appropriately selected according to the intended purpose. The duration of the heat treatment is preferably 1 minute or longer and 10 hours or shorter, and more preferably 1 minute or longer and 3 hours or shorter. Duration of the heat treatment can be duration of the heat treatment during which the lithium ion secondary battery reaches a desired temperature at which metal reduction of the cobalt and the nickel occurs. The retention time may be set to secure a period during which metal reduction progresses. The preferred range of the duration of the heat treatment is advantageous in view of cost of the heat treatment.

Therefore, the heat treatment is preferably performed for 1 hour or longer at 400°C or higher and 1,080°C or lower.

### <First classification step>

The first classification step is a step of classifying the crushed product, which is obtained by crushing the heat-treated product, to obtain a coarse-particle product 1 and a small-particle product.

The crushing process of the heat-treated product is not particularly limited as long as the crushing process is a process of crushing the heat-treated product to obtain a crushed product, and may be appropriately selected according to the intended purpose. Moreover, the crushed product encompasses a product obtained by crushing the heat-treated product.

The crushing process preferably includes, for example, crushing of the heat-treated product by impact to obtain a crushed product. In the case where the outer container of the lithium ion secondary battery does not melt during the heat treatment, the heat-treated product is preferably cut by a cutting device to pre-crush the heat-treated product before applying impact force to the heat-treated product.

Examples of a method of crushing the heat-treated product by impact include: a method in which the heat-treated product is thrown at a collision plate using a rotating striking plate, thereby applying impact force to the heat-treated product; a method in which the heat-treated product is beaten by a rotating hitting element (beater); and the like. For example, the above methods can be carried out by a hammer crusher or the like. Moreover, the method of crushing by impact may be, for example, a method of beating the heat-treated product with balls of a ceramic or the like, which can be performed by a ball mill or the like. Further, the method of crushing the heat-treated product by impact may be performed, for example, by using a twin-screw crusher having a short blade width or blade length, or the like, which performs crushing by compression.

In addition, examples of the method of crushing the heat-treated product by impact include a method in which the heat-treated product is beaten by rotating two chains to apply impact force to the heat-treated product and the like. The above method can be performed, for example, by a chain mill or the like.

When the heat-treated product is crushed by impact, crushing of the positive-electrode current collector (e.g., aluminum (Al)) is facilitated, but the negative-electrode current collector (e.g., copper (Cu)) whose form has not been significantly changed remains in a foil form or the like. The negative-electrode current collector is therefore merely cut in the crushing process. Thus, the crushed product can be obtained in the state in which a valuable material (e.g., aluminum) derived from the positive-electrode current collector and a valuable material derived from the negative-electrode current collector (e.g., copper (Cu)) can be efficiently separated in the below-described first classification step (classification process).

Duration of crushing in the crushing process is not particularly limited, and may be appropriately selected according to the intended purpose. The duration of the crushing per 1 kg of the lithium ion secondary battery is preferably 1 second or longer and 30 minutes or shorter, more preferably 2 seconds or longer and 10 minutes or shorter, and particularly preferably 3 seconds or longer and 5 minutes or shorter.

The first classification step includes a process of classifying the crushed product, which is obtained by crushing the heat-treated product, at a classification point of 600 µm or larger and 2,400 µm or smaller, preferably classifying at a classification point of 850 µm or larger and 1,700 µm or smaller, to obtain a coarse-particle product 1 and a small-particle product.

The first classification step is not particularly limited, as long as the crushed product is classified into the coarse-particle product 1 (oversize product) and the small-particle product (undersize product). The first classification step may be appropriately selected according to the intended purpose.

The classification method is not particularly limited, and may be appropriately selected according to the intended purpose. For example, the classification method can be performed by a vibration sieve, a multistage vibration sieve, a cyclone, a standard sieve of JIS Z8801, a wet vibration table, an air table, or the like. By the classification, copper (Cu), iron (Fe), and the like can be separated as the coarse-particle product 1, and lithium, cobalt, nickel, or carbon can be concentrated in the small-particle product.

As a particle size of the classification (classification point or opening size of a sieve), the classification is performed at the classification point of 600 µm or larger and 2,400 µm or smaller from the viewpoint of separation of copper (Cu), iron (Fe), aluminum (Al), and the like as the coarse-particle product 1, and concentration of carbon (C), lithium (Li), cobalt (Co), nickel (Ni), manganese (Mn), and the like in the small-particle product.

In the case where sieving is used as the classification method, classification is performed, for example, with stainless steel balls or alumina balls serving as a crush accelerator placed on the sieve, thereby separating a small crushed product, which is attached to a large crushed product, from the large crushed product. Thus, the large crushed product and the small crushed product can be efficiently separated from each other. In this manner, the grade of recovered metals can be further improved.

As described above, the crushing process can be carried out simultaneously with the classification process in the first classification step. For example, a crushing and classification step (crushing and classification) may be performed. In the crushing and classification step (crushing and classification), while crushing the heat-treated product obtained in the heat-treatment step, the crushed product is classified into a coarse-particle product 1 and a small-particle product.

In the case where a ratio of the small-particle product is low in the first classification step (classification process), the coarse-particle product 1 may be returned to the process of crushing the heat-treated product. Thus, recovery rates of valuable materials other than Fe and Cu can be improved.

### <Second classification step>

The second classification step is a step of classifying a ground product, which is obtained by grinding the small-particle product obtained in the first classification step, at a classification point smaller than the classification point of the small-particle product, to obtain a coarse-particle product 2 and a fine-particle product.

The grinding process is not particularly limited as long as the grinding process can grind the small-particle product to obtain a ground product having a predetermined size. For example, the grinding process can be performed by a media-stirring grinder (e.g., an attritor, a bead mill, and a tower mill) using media, such as iron balls or the like, a roller mill, a jet mill, a high-speed rotation grinder (e.g., a hammer mill and a pin mill), a container-driven mill (e.g., a rotary mill, a vibration mill, a planetary mill), or the like.

The grinding process may be performed in a wet process or a dry process, and may be appropriately selected according to the intended purpose. The grinding process is preferably performed in a wet process. Since the grinding is performed in a wet process, reduction in recovery rates of cobalt (Co) and nickel (Ni) due to generation and scattering of dust in each step can be minimized, and therefore it is not necessary to provide a mechanism for preventing scattering of dust into the surrounding atmosphere. In the case where wet grinding is performed, a slurry formation process is preferably performed. In the slurry formation process, the small-particle product obtained after the first classification step is immersed in water to obtain a fluid in the form of slurry (small-particle product slurry).

The slurry formation process is not particularly limited, as long as the slurry formation process is a process in which the small-particle product recovered in the first classification step is immersed in water (immerse in or added to water) to disperse the small-particle product in water, thereby obtaining slurry (a suspension liquid). The slurry formation process may be appropriately selected according to the intended purpose.

The particle size (90% particle size) of the ground product is preferably 1,000 µm or smaller, more preferably 750 µm or smaller, and particularly preferably 500 µm or smaller. The 90% particle size is, for example, a particle diameter at a 90% point of a cumulative particle size distribution obtained by a laser diffraction/scattering particle size distribution analyzer.

Moreover, the number-weighted average particle diameter of cobalt, or nickel, or both cobalt and nickel included in the ground product is preferably 100 µm or smaller, more preferably 75 µm or smaller, and particularly preferably 50 µm or smaller. The number-weighted average particle diameter is, for example, an average value determined by observing 100 particles in total, which include cobalt particles, nickel particles, or both, under an electron microscope to measure the particle diameters of the 100 particles, and calculating an average value of the measured values.

The smaller the 90% particle size or the number-weighted average particle diameter is, the more readily cobalt and nickel are separated from other constituent components as single substances. Therefore, the cobalt content and nickel content of the magnetic component 1 recovered in the first magnetic separation step, and the cobalt content and nickel content of the magnetic component 2 recovered in the second magnetic separation step can be improved. Even when the 90% particle size or the number-weighted average particle diameter is small, an additional recovery step, such as a third magnetic separation step, may be optionally provided in order to further improve the recovery rates of cobalt and nickel in the first magnetic separation step and the second magnetic separation step.

A dispersion medium used to form the small-particle product into slurry is not particularly limited, and may be appropriately selected according to the intended purpose. Examples of the dispersion medium include: pure water, such as industrial water, tap water, ion-exchanged water, ultrafiltered water, reverse osmosis water, and distilled water; ultrapure water; and the like.

The slurry formation process is not particularly limited, and may be appropriately selected according to the intended purpose. Examples of the slurry formation process include: a method in which the small-particle product is simply added to water; a method in which the small-particle product is added to water and stirred; a method in which the small-particle product is added to water, and gently stirred while applying ultrasonic waves; a method in which water is added to the small-particle product; and the like. Among the above methods, the method in which the small-particle product is added to water and stirred, and the method in which the small-particle product is added to water and gently stirred while applying ultrasonic waves are more preferred.

The solid-liquid ratio (the concentration (mass ratio) of the small-particle product relative to water) in the slurry formation process is not particularly limited, and may be appropriately selected according to the intended purpose. The solid-liquid ratio is preferably 1 percent by mass or greater and 50 percent by mass or less, and more preferably 5 percent by mass or greater and 20 percent by mass or less. When the solid-liquid ratio is less than 1 percent by mass, cobalt and nickel that are originally to be recovered as a magnetic component are not recovered by a magnetic separator, and loses of cobalt and nickel to the non-magnetic component may be caused so that it is highly likely to reduce recovering rates of cobalt and nickel. When the solid-liquid ratio is greater than 50 percent by mass, an amount of impurities mixed in a magnetic component is increased, which may reduce the cobalt content and the nickel content.

The speed for stirring water in the slurry formation process is not particularly limited, and may be appropriately selected according to the intended purpose. For example, the stirring speed can be 200 rpm.

The leaching duration in the slurry formation process is not particularly limited, and may be appropriately selected according to the intended purpose. For example, the leaching duration can be 1 hour.

In the second classification step, the ground product obtained in the grinding process is classified at a classification point, which is smaller than the classification point of the first classification step and is 75 µm or larger and 1,200 µm or smaller, thereby obtaining a coarse-particle product 2 and a fine-particle product.

For example, in the case where the second classification step is performed on the ground product, which is obtained in the grinding process, using a 500 µm standard sieve of JIS Z8801, an oversize product on the standard sieve having the classification point of 500 µm is the coarse-particle product 2, and an undersize product below the standard sieve is the fine-particle product. Note that copper can be concentrated in and recovered from the coarse-particle product 2.

The classification point used in the second classification step is preferably 25 µm or larger and 1,700 µm or smaller, more preferably 75 µm or larger and 1,200 µm or smaller, yet more preferably 75 µm or larger and 850 µm or smaller, and particularly preferably 106 µm or larger and 600 µm or smaller. When the classification point is larger than 1,700 µm, the amount of copper mixed in the fine-particle product is increased, which may reduce the cobalt content the nickel content of the fine-particle product. When the classification point is smaller than 25 µm, grinding energy for recovering cobalt and nickel into the fine-particle product may become excessive.

The classification process in the second classification step is not particularly limited, and may be appropriately selected according to the intended purpose. For example, the classification process may be performed by a vibration sieve, a multistage vibration sieve, a cyclone, a standard sieve of JIS Z8801, a wet vibration table, an air table, or the like.

The second classification step is not particularly limited, and may be appropriately selected according to the intended purpose. The second classification step is preferably performed in a wet process. In the case where wet classification is performed, ground product slurry obtained in the wet grinding process may be provided as it is, or a dispersion medium (water) may be added to the ground product slurry to dilute the slurry to thereby adjust a solid-liquid ratio.

In the case where the second classification step is performed in a wet process and uses a vibration sieve or multistage vibration sieve, a dispersion medium (water) is showered from the top of the sieve to minimize aggregation of particles of the ground product during classification so that an excellent classification performance can be achieved. Moreover, the phase angle of the weight of the vibration sieve is preferably 30° or greater and 90° or less, more preferably 40° or greater and 80° or less, and particularly preferably 50° or greater and 70° or less. By setting the phase angle in the above range, excess discharge of the ground product or a classified product to the outside of the sieve device (excessively short retention time on the sieve) can be inhibited, and an excellent classification performance can be achieved.

<First magnetic separation step>

The first magnetic separation step is a step of subjecting the fine-particle product obtained in the second classification step to magnetic separation to obtain a magnetic component 1 and a non-magnetic component 1.

The magnetic component 1 is a component that can be attracted toward a magnetic source (e.g., a magnet, an electromagnet, etc.) due to attraction between the component and the magnetic source caused by a magnetic force generated by the magnetic force source. The magnetic source is configured to generate a magnetic force (magnetic field). Examples of the magnetic component 1 include ferromagnetic metals and the like. Examples of the ferromagnetic metals include iron (Fe), nickel (Ni), cobalt (Co), and the like.

The non-magnetic component 1 encompasses a component that is not attracted toward the magnetic source by the magnetic force generated by the magnetic source. The non-magnetic component is not particularly limited, and may be appropriately selected according to the intended purpose. Moreover, examples of metals that are the non-magnetic component include paramagnetic metals, semi-magnetic metals, and the like. Examples of the paramagnetic metals or the semi-magnetic metals include aluminum (Al), manganese (Mn), gold (Au), silver (Ag), copper (Cu), and the like.

The first magnetic separation step may include dry magnetic separation or wet magnetic separation. The first magnetic separation step preferably includes wet magnetic separation from the following point.

When magnetic separation is performed on the fine-particle product obtained in the second classification step, in the case of the dry magnetic separation, for example, moisture is deposited between particles, thereby causing aggregation of the particles. Therefore, cobalt particles and nickel particles might not be sufficiently separated from metal particles derived from the negative-electrode current collector, and the negative-electrode active material particles included in the fine-particle product in an amount of 10% or greater. Therefore, in the present invention, wet magnetic separation is preferably performed to separate the materials derived from the negative-electrode current collector, and the negative-electrode active material particles into the non-magnetic component slurry and to recover cobalt and nickel as the magnetic component 1.

During wet magnetic separation, the fine-particle product slurry obtained in the wet second classification step may be supplied as it is, or the fine-particle product slurry may be concentrated or diluted by solid-liquid separation, such as sedimentation separation, to adjust a solid-liquid ratio. Moreover, water may be added to the fine-particle product slurry to dilute the fine-particle product slurry, thereby adjusting a solid-liquid ratio. The solid-liquid ratio (the concentration (mass ratio) of the fine-particle product relative to water) of the slurry supply to the wet magnetic separation is not particularly limited, and may be appropriately selected according to the intended purpose. The solid-liquid ratio of the slurry is preferably 5 percent by mass or greater and 67 percent by mass or less, and more preferably 10 percent by mass or greater and 40 percent by mass or less. When the solid-liquid ratio is less than 5 percent by mass, recovering rates of cobalt and nickel as a magnetic component in a wet magnetic separator may be reduced. When the solid-liquid ratio is greater than 67 percent by mass, a problem, such as blockage of a pump during supply of the slurry or the like, is likely to be caused, and the separation performance of a non-magnetic component, such as carbon, from cobalt and nickel (magnetic component) may be lowered.

A method of supplying the slurry is not particularly limited, and may be appropriately selected according to the intended purpose. The slurry may be supplied by a pump, while stirring the slurry in a tank.

The first magnetic separation step is not particularly limited, and can be performed by a magnetic force separator (magnetic separator) known in the related art or the like. Examples of the magnetic force separator include drum magnetic separators, high-gradient magnetic separators, and the like. Among the above magnetic force separators, a drum magnetic separator is preferred.

The magnetic flux density of the magnetic separation in the first magnetic separation step is not particularly limited, and may be appropriately selected according to the intended purpose. The magnetic flux density is preferably 500 G or greater and 9,000 G or less, more preferably 750 G or greater and 6,000 G or less, yet more preferably 1,000 G or greater and less than 3,000 G, and particularly preferably 1,000 G or greater and 2,000 G or less. When the magnetic flux density is less than 500 G, it may be difficult to magnetically attract fine particles of cobalt and nickel so that recovery rates of cobalt and nickel in the magnetic component are likely to be reduced. When the magnetic flux density is greater than 9,000 G, a recovery rate of impurities other than cobalt and nickel in the magnetic component 1 is increased so that a cobalt content and nickel content of the magnetic component 1 may be reduced.

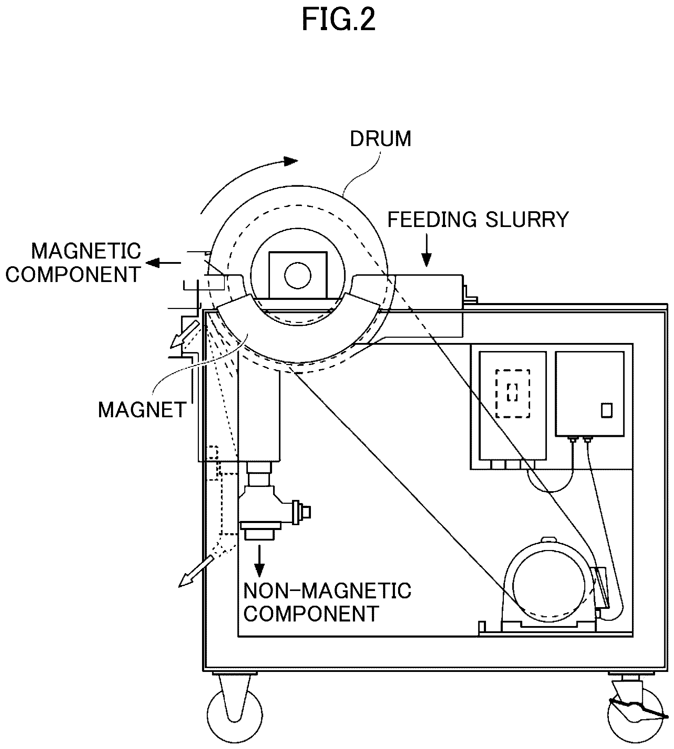

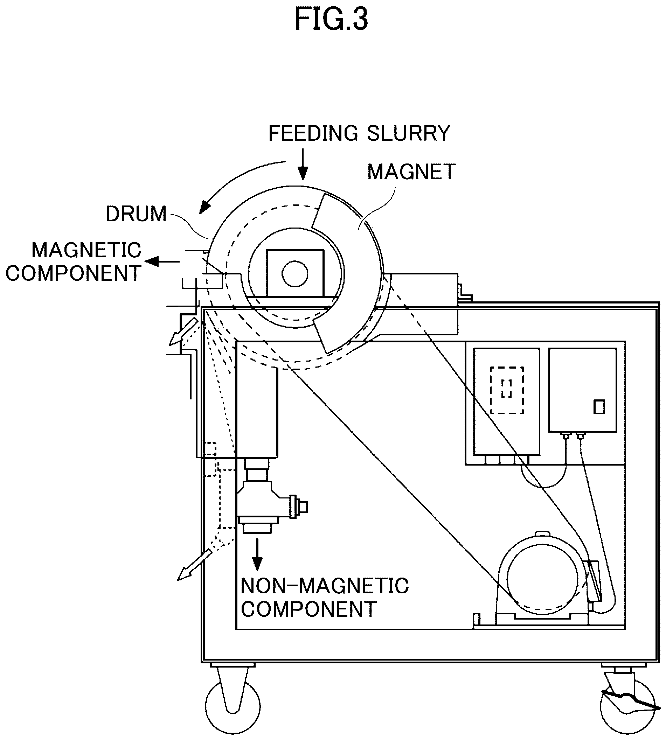

Examples of the wet drum magnetic separation method in the first magnetic separation step include: (1) a method in which, as illustrated in Fig. 2, a magnet is arranged in a 6 o'clock-direction of a drum, the non-magnetic component 1 slurry is fed from the 3 o'clock-direction (from the side) of the drum, and the drum is rotated in the clockwise direction; (2) a method in which, as illustrated in Fig. 3, a magnet is arranged in the vicinity of the 3 o'clock-direction of a drum, the non-magnetic component 1 slurry is fed from the 12 o'clock to 2 o'clock-direction (from the top) of the drum, and the drum is rotated in the counterclockwise direction; and the like.

Among the above methods, (1) the wet drum magnetic separation method illustrated in Fig. 2 is preferred because a magnetic component including a high cobalt content and a high nickel content is obtained.

### <Second magnetic separation step>

The second magnetic separation step is a step of subjecting the non-magnetic component 1 obtained in the first magnetic separation step to magnetic separation to obtain a magnetic component 2 and a non-magnetic component 2. In the case where dust generated transporting the small-particle product obtained in the first classification step is collected and recovered, the collected dust can be used as a magnetic separation target in the second magnetic separation step.

The sum of the cobalt content and nickel content of the non-magnetic component 1 obtained in the first magnetic separation step is preferably 30% or less, more preferably 20% or less, and particularly preferably 15% or less.

Even from the non-magnetic component 1, in which the sum of the cobalt content and nickel content is 30% or less, a magnetic component can be recovered in the second magnetic separation step so that recovery rates of cobalt and nickel can be improved.

However, it is a known fact that cobalt and nickel can be readily recovered in the magnetic component when the cobalt content and nickel content of the non-magnetic component are high.

The number-weighted average particle diameter of cobalt, nickel, or both in the non-magnetic component 1 obtained in the first magnetic separation step is preferably 50 µm or smaller, more preferably 35 µm or smaller, and particularly preferably 25 µm or smaller. The number-weighted average particle diameter is, for example, an average value determined by observing 100 particles in total, which include cobalt particles, nickel particles, or both, under an electron microscope to measure the particle diameters of the 100 particles, and calculating an average value of the measured values. The smaller the number-weighted average particle diameter is, the more readily cobalt or nickel is separated from other constituent components as single substances. Therefore, the cobalt content and nickel content of the magnetic component 2 recovered in the second magnetic separation step can be improved. Note that an additional recovering step, such as a third magnetic separation step or the like, can be optionally provided to further increase recovery rates of cobalt and nickel of the second magnetic separation step.

Even when the cobalt particles and the nickel particles have the number-weighted average particle diameter of 50 µm or smaller, the cobalt particles and the nickel particles can be recovered as a magnetic component in the second magnetic separation step so that recovery rates of cobalt and nickel can be improved over the entire process.

The second magnetic separation step is not particularly limited, and can be performed by a magnetic force separator (magnetic separator) known in the related art. Examples of the magnetic force separator include drum magnetic separators, high-gradient magnetic separators, and the like.

The magnetic flux density of the magnetic separation in the second magnetic separation step is not particularly limited, and may be appropriately selected according to the intended purpose. The magnetic flux density is preferably 3,000 G or greater and 20,000 G or less, more preferably 4,000 G or greater and 18,000 G or less, and particularly preferably 6,000 G or greater and 12,000 G or less. When the magnetic flux density is less than 3,000 G, it may be difficult to magnetically attract fine particles of cobalt and nickel so that recovery rates of cobalt and nickel in the magnetic component are likely to be reduced. When the magnetic flux density is greater than 20,000 G, a recovery rate of impurities other than cobalt and nickel in the magnetic component 2 is increased so that a cobalt content and nickel content of the magnetic component 2 may be reduced.

The second magnetic separation step may include dry magnetic separation or wet magnetic separation, but preferably includes wet magnetic separation.

It is preferred that the magnetic separation of the second magnetic separation step is wet magnetic separation and uses a wet high-gradient magnetic separation method. The wet high-gradient magnetic separation method may be repeated twice or more.

Since the magnetic flux density largely varies in the wet high-gradient magnetic separation method, matrices are preferably used.

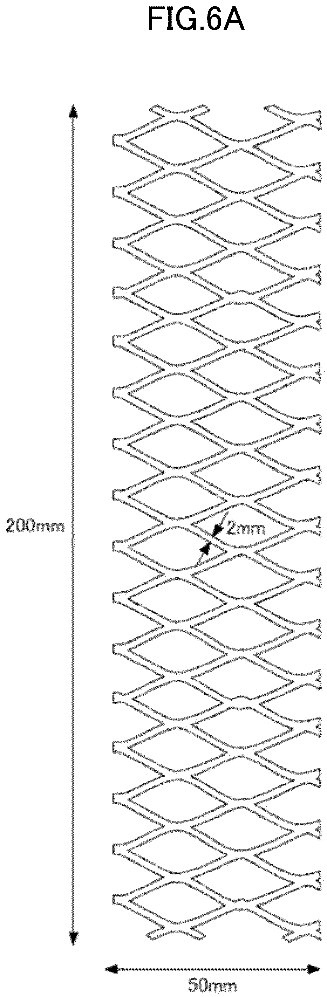

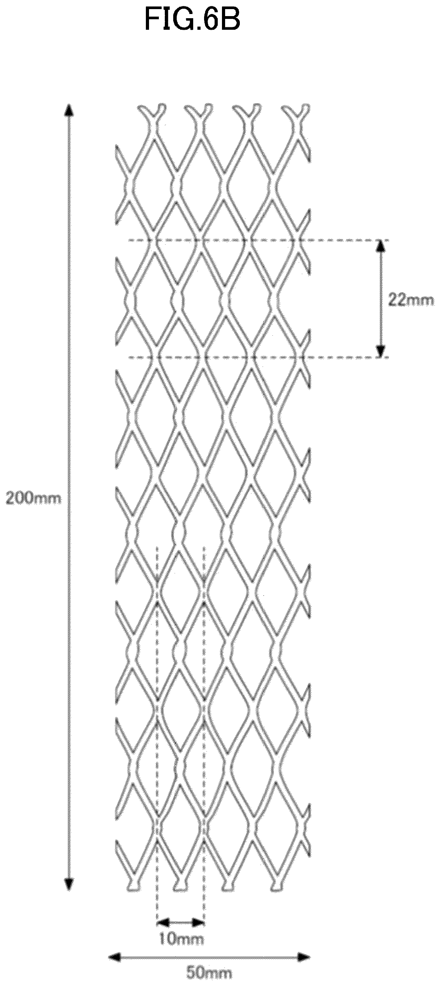

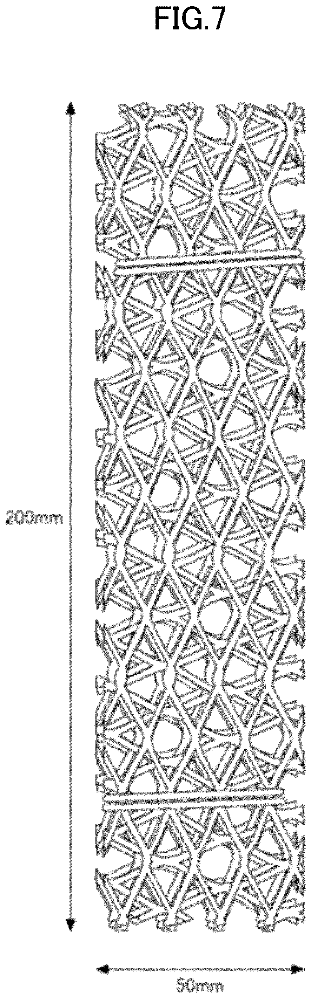

As the matrices, for example, a matrix member (200 mm in width × 50 mm in length × 28 mm in thickness) illustrated in Fig. 7 or the like is used. In the matrix member, a horizontal iron matrix (line width: 2 mm, thickness: 4 mm, 200 mm in width × 50 mm in length) illustrated in Fig. 6A and a vertical iron matrix (maximum length of rhombus: 22 mm, minimum length of rhombus: 10 mm, thickness: 4 mm, 200 mm in width × 50 mm in length) illustrated in Fig. 6B are used, and three horizontal matrices of Fig. 6A and four vertical matrices of Fig. 6B are alternately stacked and bundled together.

The second magnetic separation step preferably includes wet magnetic separation, and preferably uses the wet drum magnetic separation method.

Examples of the wet drum magnetic separation method in the second magnetic separation step include a method in which the non-magnetic component slurry is fed to a rotating drum including a magnet.

The rotational direction is not particularly limited, and may be appropriately selected according to the intended purpose. The rotational direction may be the clockwise direction or the counterclockwise direction.

The position of the magnet in the drum is not particularly limited, and may be appropriately selected according to the intended purpose. For example, the position of the magnet may be the position that is the same as or different from the position at which the non-magnetic component slurry is fed.

Specific examples of the wet drum magnetic separation method in the second magnetic separation step include: (1) a method in which, as illustrated in Fig. 2, a magnet is arranged in a 6 o'clock-direction of a drum, the non-magnetic component 1 slurry is fed from the 3 o'clock-direction (from the side) of the drum, and the drum is rotated in the clockwise direction; a method in which, as illustrated in Fig. 3, a magnetic arranged in the vicinity of the 3 o'clock-direction of a drum, the non-magnetic component 1 slurry is fed from the 12 o'clock to 2 o'clock-direction (from the top) of the drum, and the drum is rotated in the counterclockwise direction; and the like.

Among the above methods, (2) the wet drum magnetic separation method illustrated in Fig. 3 is preferred because cobalt and nickel are obtained at high recovery rates. Note that, in (2) the method illustrated in Fig. 3, the magnetic component attracted onto the magnet is transported and recovered in the 9 o'clock-direction by rotations of the drum, and the non-magnetic component slurry 2 is flown along the surface of the drum in the 3 o'clock to 6 o'clock-direction, followed by being discharged from the 6 o'clock-direction.

The second magnetic separation step can be performed by adding a dispersant to the slurry of the non-magnetic component 1 obtained in the first magnetic separation step. By adding the dispersant to the slurry of the non-magnetic component 1, the magnetic separation efficiency of the second magnetic separation step can be improved.

The dispersant is not particularly limited, and may be appropriately selected according to the intended purpose. For example, any of dispersants used in the fields of dyes, pigments, agricultural chemicals, and inorganic materials can be used.

Examples of the dispersant include condensates of aromatic sulfonic acid and formalin, anionic surfactants including, as a main component, a special carboxylic acid-type polymer surfactant **(e.g.,** surfactants of "Demol" series, produced by Kao Corporation), and the like.

Note that magnetic separation may be additionally performed on the magnetic component 1 and the magnetic component 2, or either the magnetic component 1 or the magnetic component 2, and additional magnetic separation may be additionally performed on the non-magnetic component 1 and the non-magnetic component 2, or either the non-magnetic component 1 or the non-magnetic component **2.**

The sum of the cobalt content and nickel content of the magnetic component obtained by wet magnetic separation is preferably concentrated to 1.3 times or more, more preferably 1.5 times or more the sum of the cobalt content and nickel content of the small-particle product.

### <Recovering step>

The recovering step is a step of recovering valuable materials from the magnetic component 1 and the magnetic component **2.**

In the recovering step, the magnetic component 1 and the magnetic component 2 are subjected to solid-liquid separation to recover valuable materials. Before the solid-liquid separation, the magnetic component 1 and the magnetic component 2 may be washed. A content of impurities, such as fluorine, of the magnetic component can be reduced by washing.

The washing water used for the washing is not particularly limited, and may be appropriately selected according to the intended purpose. Examples of the washing water include: pure water, such as industrial water, tap water, ion-exchanged water, ultrafiltered water, reverse osmosis water, and distilled water; ultrapure water; and the like.

Since the moisture is included in the magnetic component 1 and the magnetic component 2 recovered in the first and second magnetic separation steps, the moisture may be removed from the magnetic component 1 and the magnetic component 2 by performing solid-liquid separation using filter paper, a filter press, or centrifugal separator, or by air drying or heating and drying with a dryer.

### <Other steps>

Other steps are not particularly limited, and may be appropriately selected according to the intended purpose. Examples of other steps include a drying step, a refining step, and the like.

### <Example of embodiment>

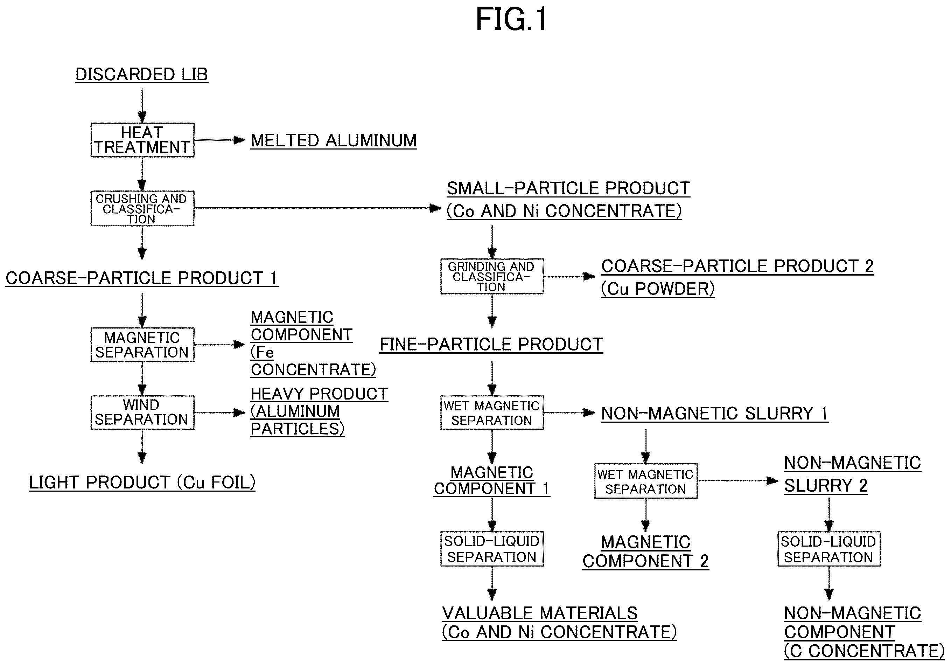

One example of the embodiment of the method for recovering valuable materials from lithium ion secondary batteries of the present invention will be described with reference to a drawing hereinafter. Fig. 1 is a diagram illustrating one example of a process flow in the embodiment of the method for recovering valuable materials from lithium ion secondary batteries of the present invention.

First, a heat treatment (heat-treatment step) is performed on a discarded lithium ion secondary battery (lithium ion battery (LIB)) to obtain a heat-treated product (heat-treatment step).

Next, a crushed product obtained by crushing the heat-treated product is classified at a classification point of 600 µm or larger and 2,400 µm or smaller to obtain a coarse-particle product 1 and a small-particle product (first classification step). At this point, copper (Cu), aluminum (Al), iron (Fe), and the like can be recovered from the coarse-particle product 1.

Subsequently, the small-particle product is immersed in water to obtain small-particle product slurry. At this point, lithium (lithium oxide or lithium carbide) is leached into water, and the residues including nickel (Ni) and cobalt (Co) are formed into the small-particle product slurry.

Next, the obtained small-particle product slurry is subjected to wet grinding to obtain ground product slurry.

Next, the obtained ground product slurry is subjected to wet classification at a classification point of 25 µm or larger and 1,700 µm or smaller, thereby obtaining coarse-particle product slurry 2 and fine-particle product slurry (second classification step).

Next, the obtained fine-particle product slurry is subjected to magnetic separation to obtain a magnetic component 1 and non-magnetic component slurry 1 (first magnetic separation step).

Next, the obtained non-magnetic component slurry 1 is subjected to magnetic separation to obtain a magnetic component 2 and non-magnetic component slurry 2 (second magnetic separation step).

The obtained magnetic component 1 and magnetic component 2 are subjected to solid-liquid separation, thereby recovering nickel (Ni) and cobalt (Co). Further, the non-magnetic component slurry 2 is subjected to solid-liquid separation, thereby recovering carbon and copper.

### Examples

Examples of the present invention will be described hereinafter, but the present invention is not limited by Examples below.

### (Example 1)

### -Heat-treatment step-

A heat treatment was performed on discarded lithium ion secondary batteries (approximately 300 kg), which were a processing target, by a batch burner furnace of Eco-System Akita Co., Ltd. serving as a heat-treatment device at a heat-treatment temperature of 750°C (elevating the temperature from 20°C to 750°C over the period of 15 minutes, followed by retaining the temperature at 750°C for 3 hours) in an ambient atmosphere to obtain a heat-treated product.

### -Crushing step-

Subsequently, the lithium ion secondary batteries, which had been subjected to the heat treatment, were crushed by a chain mill (Cross Flow Shredder S-1000, produced by SATO TEKKO CO., LTD.) serving as a crushing device at 50 Hz (chain tip speed: approximately 60 m/s) for a retention time of 50 seconds, thereby obtaining a crushed product of the lithium ion secondary batteries.

### -First classification step-

Subsequently, the crushed product of the lithium ion secondary batteries was sieved using a vibration sieve having an sieve opening size of 1.2 mm (diameter: 200 mm, produced by TOKYO SCREEN CO., LTD.) to sort the crushed product of the lithium ion secondary batteries. After the sieving, an oversize product (coarse-particle product 1) relative to 1.2 mm and an undersize product (small-particle product) relative to 1.2 mm were each collected. The cobalt content and nickel content of the small-particle product (black mass) were 6.2% and 13.5%, respectively, and the sum of the cobalt content and the nickel content was 19.7%.

### -Slurry formation step-

The obtained small-particle product in the amount of 62.5 kg was immersed in 250 L of water, and a slurry formation process was performed under conditions such that the solid-liquid ratio was 25%, the stirring speed was 400 rpm, and the leaching duration was 1 hour, thereby obtaining small-particle product slurry.

### -Wet grinding step-

The obtained fine-particle product slurry and 10 kg of grinding media (iron balls) were subjected to wet grinding for 30 minutes by a media-stirring grinder (Tower Mill NE008, produced by Nippon Eirich Co., Ltd.). For the wet grinding, the fine-particle product slurry was supplied in 20 batches, and the number of revolution per batch was 716 rpm (circumferential speed: 3 m/sec).

### -Second classification step-

Next, the obtained small-particle product slurry was subjected to wet classification using two standard sieves of JIS Z8801 having sieving classification points (opening size) of 500 µm and 250 µm, respectively, thereby collecting an oversize product (coarse-particle product 2) relative to the opening size of 500 µm and an undersize product (fine-particle product slurry) relative to the opening size of 250 µm. Note that the intermediate-particle product on the sieve having the opening size of 250 µm was returned back to the previous wet grinding step, and the grinding was repeated until the entire portion of the intermediate-particle product passed through the sieve of 250 µm.

### -First magnetic separation step-

A first magnetic separation step was performed on the obtained fine-particle product slurry (slurry concentration: 15 percent by mass) by a wet drum magnetic separator (model: WD L-8 Lab model, produced by Eriez Magnetics Japan Co., Ltd.) illustrated in Fig. 2 at a magnetic flux density of 1,500 G, and at a drum rotational speed of 40 rpm, thereby recovering a magnetic component 1 and non-magnetic component slurry 1.

The wet drum magnetic separator illustrated in Fig. 2 is a device, in which a magnet is arranged in the 6 o'clock-direction of a drum, the non-magnetic component 1 slurry is fed from the 3 o'clock-direction (from the side) of the drum, and magnetic separation is performed while rotating the drum in the clockwise direction.

The obtained non-magnetic component slurry 1 was observed under an electron microscope to measure particles diameters of 100 particles in total, which included the cobalt particles and nickel particles, and the number-weighted average particle diameter was determined. As a result, the number-weighted average particle diameter was 10 µm.

Moreover, the cobalt content of the non-magnetic component 1 in the non-magnetic component slurry 1 was 3.4%, the nickel content of the non-magnetic component 1 in the non-magnetic component slurry 1 was 8.2%, and the sum of the cobalt content and the nickel content was 11.6%.

### -Second magnetic separation step-

A second magnetic separation step was performed on the non-magnetic component slurry 1 (slurry concentration: 30 percent by mass) obtained in the first magnetic separation step by a wet drum magnetic separator (model: WD REX 1.5 in diameter × 12 W, produced by Eriez Magnetics Japan Co., Ltd.) illustrated in Fig. 2 at a magnetic flux density of 6,000 G, and at a drum rotational speed of 5 rpm, thereby recovering a magnetic component 2 and non-magnetic component slurry 2.

The wet drum magnetic separator illustrated in Fig. 2 is a device, in which a magnet is arranged in the 6 o'clock-direction of a drum, the non-magnetic component 1 slurry is fed from the 3 o'clock-direction (from the side) of the drum, and magnetic separation is performed while rotating the drum in the clockwise direction.

Next, the cobalt content and nickel content, and the recovery rates of cobalt and nickel were measured in the following manner. The results are presented in Tables 1 and **2.**

### <Measurement of cobalt content and nickel content>

After drying the obtained coarse-particle product 2, fine-particle product, magnetic component 1, non-magnetic component 1, and magnetic component 2 at 105°C for 1 hour, a mass of each of the coarse-particle product 2, fine-particle product, magnetic component 1, non-magnetic component 1, and magnetic component 2 was measured by an electromagnetic balance (product name: GX-8K, produced by A&D Company, Limited). Then, the fine-particle product, the magnetic component 1, the non-magnetic component 1, and the magnetic component 2 were each dissolved in aqua regia by heating, and analyzed using a high-frequency inductively coupled plasma emission spectrometer (SPECTROGREEN FMX46, produced by Hitachi High-Tech Science Corporation) to determine a cobalt content and a nickel content.

### <Calculation of recovery rates of cobalt and nickel>

A total amount of cobalt and a total amount of nickel included in the coarse-particle product 2, the magnetic component 1, the non-magnetic component 1, and the magnetic component 2 were each determined as 100%, and a recovery rate of the cobalt and a recovery rate of the nickel each recovered in the magnetic component 1 and the magnetic component 2 were calculated.

### (Example 2)

Cobalt and nickel were recovered in the same manner as in Example 1, except that a second magnetic separation step was performed on the non-magnetic component slurry 1 (slurry concentration: 30 percent by mass) obtained in the first magnetic separation step by a wet drum magnetic separator (model: WD REX 1.5 in diameter × 12 W, produced by Eriez Magnetics Japan Co., Ltd.) illustrated in Fig. 3 at a magnetic flux density of 6,000 G and at a drum rotational speed of 5 rpm.

The wet drum magnetic separator is a device in which a magnet is arranged in the 3 o'clock-direction of a drum, the non-magnetic component slurry 1 is fed from the 12 o'clock to 2 o'clock-direction (from the top) of the drum, and magnetic separation is performed while rotating the drum in the counterclockwise direction.

Next, the cobalt content and nickel content, and the recovery rates of cobalt and nickel were measured in the same manner as in Example 1. The results are presented in Tables 1 and 2.

### (Example 3)

Cobalt and nickel were recovered in the same manner as in Example 1, except that a second magnetic separation step was performed on the non-magnetic component slurry 1 (slurry concentration: 30 percent by mass) obtained in the first magnetic separation step by a wet drum magnetic separator (model: WD REX 1.5 in diameter × 12 W, produced by Eriez Magnetics Japan Co., Ltd.) illustrated in Fig. 3 at a magnetic flux density of 6,000 G and at a drum rotational speed of 20 rpm.

The wet drum magnetic separator is a device in which a magnet is arranged in the 3 o'clock-direction of a drum, the non-magnetic component slurry 1 is fed from the 12 o'clock to 2 o'clock-direction (from the top) of the drum, and magnetic separation is performed while rotating the drum in the counterclockwise direction.

Next, the cobalt content and nickel content, and the recovery rates of cobalt and nickel were measured in the same manner as in Example 1. The results are presented in Tables 1 and 2.

### (Example 4)

Cobalt and nickel were recovered in the same manner as in Example 1, except that a second magnetic separation step was performed on the non-magnetic component slurry 1 (slurry concentration: 15 percent by mass) obtained in the first magnetic separation step by a wet drum magnetic separator (model: WD REX 1.5 in diameter × 12 W, produced by Eriez Magnetics Japan Co., Ltd.) illustrated in Fig. 3 at a magnetic flux density of 6,000 G and at a drum rotational speed of 5 rpm.

Next, the cobalt content and nickel content, and the recovery rates of cobalt and nickel were measured in the same manner as in Example 1. The results are presented in Tables 1 and 2.

### (Example 5)

Cobalt and nickel were recovered in the same manner as in Example 1, except that a second magnetic separation step was performed on the non-magnetic component slurry 1 (slurry concentration: 15 percent by mass) obtained in the first magnetic separation step by a wet drum magnetic separator (model: WD REX 1.5 in diameter × 12 W, produced by Eriez Magnetics Japan Co., Ltd.) illustrated in Fig. 3 at a magnetic flux density of 6,000 G and at a drum rotational speed of 20 rpm.

Next, the cobalt content and nickel content, and the recovery rates of cobalt and nickel were measured in the same manner as in Example 1. The results are presented in Tables 1 and 2.

### (Example 6)

Cobalt and nickel were recovered in the same manner as in Example 1, except that a second magnetic separation step was performed on the non-magnetic component slurry 1 (slurry concentration: 15 percent by mass) obtained in the first magnetic separation step by a wet high-gradient magnetic separator (model: L-4, produced by Eriez Magnetics Japan Co., Ltd.) at an air-gap magnetic flux density of 3,000 G.

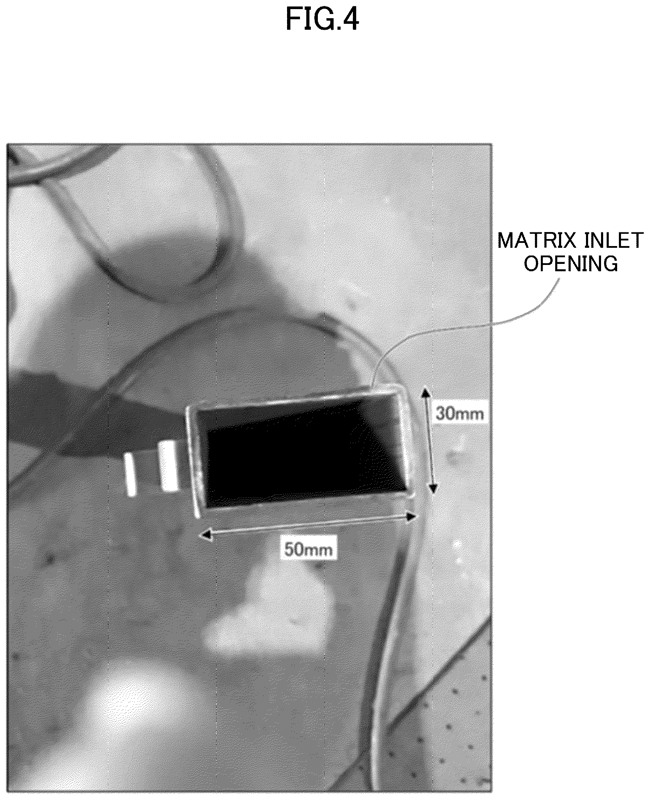

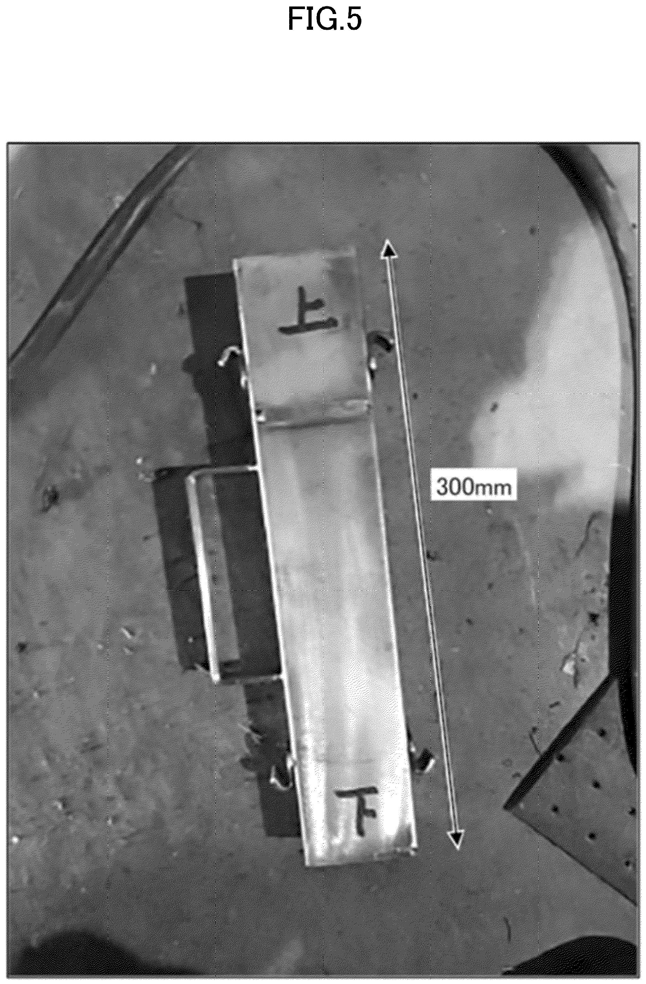

As the wet high-gradient magnetic separator, a device in which a matrix member (200 mm in width × 50 mm in length × 28 mm in thickness) illustrated in Fig. 7 was placed in a container illustrated in Fig. 5, and mounted from the matrix inlet opening illustrated in Fig. 4, was used. The matrix member was obtained by alternately stacking three horizontal iron matrices (line width: 2 mm, thickness: 4 mm, 200 mm in width × 50 mm in length) illustrated in Fig. 6A and four vertical iron matrices (maximum length of rhombus: 22 mm, minimum length of rhombus: 10 mm, thickness: 4 mm, 200 mm in width × 50 mm in length) illustrated in Fig. 6B, and bundled together.

Next, the cobalt content and nickel content, and the recovery rates of cobalt and nickel were measured in the same manner as in Example 1. The results are presented in Tables 1 and 2.

### (Example 7)

Cobalt and nickel were recovered in the same manner as in Example 6, except that a second magnetic separation step was performed on the non-magnetic component slurry 1 (slurry concentration: 15 percent by mass) obtained in the first magnetic separation step by a wet high-gradient magnetic separator (model: L-4, produced by Eriez Magnetics Japan Co., Ltd.) at an air-gap magnetic flux density of 6,000 G.

Next, the cobalt content and nickel content, and the recovery rates of cobalt and nickel were measured in the same manner as in Example 1. The results are presented in Tables 1 and 2.

### (Example 8)

Cobalt and nickel were recovered in the same manner as in Example 6, except that a second magnetic separation step was performed on the non-magnetic component slurry 1 (slurry concentration: 15 percent by mass) obtained in the first magnetic separation step by a wet high-gradient magnetic separator (model: L-4, produced by Eriez Magnetics Japan Co., Ltd.) at an air-gap magnetic flux density of 12,000 G.

Next, the cobalt content and nickel content, and the recovery rates of cobalt and nickel were measured in the same manner as in Example 1. The results are presented in Tables 1 and 2.

### (Example 9)

Cobalt and nickel were recovered in the same manner as in Example 1, except that a first magnetic separation step was performed by a wet drum magnetic separator (model: WM REX 1.5 in diameter × 12 W, produced by Eriez Magnetics Japan Co., Ltd.) illustrated in Fig. 2 at a magnetic flux density of 6,000 G, and at a drum rotational speed of 40 rpm.

Next, the cobalt content and nickel content, and the recovery rates of cobalt and nickel were measured in the same manner as in Example 1. The results are presented in Tables 1 and 2.

### (Comparative Example 1)

Cobalt and nickel were recovered in the same manner as in Example 1, except that the second magnetic separation step was not performed.

Next, the cobalt content and nickel content, and the recovery rates of cobalt and nickel were measured in the same manner as in Example 1. The results are presented in Tables 1 and 2.

**[Table 1]**

| | First magnetic separation step conditions | | | | | Results | | |
|---|---|---|---|---|---|---|---|---|
| | Magnetic flux density | Type of magnetic separator | Slurry feeding method | Slurry concentration | Number of revolutions of drum | Recovery rate in magnetic component 1 | | Sum of Co content and Ni content of magnetic component 1 |
| | | | | | | Co | Ni | |
| | (G) | (-) | (-) | (mass%) | (rpm) | (%) | (%) | (mass%) |
| Ex. 1 | 1,500 | Drum | Fig. 1 | 15 | 40 | 36 | 37 | 41.4 |
| Ex. 2 | | | | | | | | |
| Ex. 3 | | | | | | | | |
| Ex. 4 | | | | | | | | |
| Ex. 5 | | | | | | | | |
| Ex. 6 | | | | | | | | |
| Ex. 7 | | | | | | | | |
| Ex. 8 | | | | | | | | |
| Comp. Ex. 1 | | | | | | | | |
| Ex. 9 | 6,000 | | | | | 85 | 86 | 23.2 |

**[Table 2]**

| | Second magnetic separation step conditions | | | | | Results | | |
|---|---|---|---|---|---|---|---|---|
| | Magnetic flux density | Type of magnetic separator | Slurry feeding method | Slurry concentration | Number of revolutions of drum | Recovery rate in magnetic components 1 and 2 | | Sum of Co content and Ni content of magnetic conponents 1 and 2 |
| | | | | | | Co | Ni | |
| | (G) | (-) | (-) | (mass%) | (rpm) | (%) | (%) | (mass%) |
| Ex. 1 | 6,000 | Drum | Fig. 2 | 30 | 5 | 64 | 66 | 39.4 |
| Ex. 2 | 6,000 | Drum | Fig. 3 | 30 | 5 | 91 | 92 | 35.5 |
| Ex. 3 | 6,000 | Drum | Fig. 3 | 30 | 20 | 94 | 94 | 34.5 |
| Ex. 4 | 6,000 | Drum | Fig. 3 | 15 | 5 | 93 | 94 | 35.1 |
| Ex. 5 | 6,000 | Drum | Fig. 3 | 15 | 20 | 93 | 94 | 34.9 |
| Ex. 6 | 3,000 | High gradient | - | 15 | - | 92 | 93 | 39.4 |
| Ex. 7 | 6,000 | High gradient | - | 15 | - | 93 | 94 | 38.7 |
| Ex. 8 | 12,000 | High gradient | - | 15 | - | 93 | 94 | 38.8 |
| Ex. 9 | 6,000 | Drum | Fig. 3 | 15 | 5 | 92 | 93 | 23.0 |
| Comp. Ex. 1 | Second magnetic separation step was not performed | | | | | 36 | 37 | 41.4 |

It was found from the results of Tables 1 and 2 that, even when a cobalt content and nickel content of the fine-particle product slurry serving as the magnetic separation target were low, cobalt and nickel could be recovered at high recovery rates by performing the second magnetic separation after the first magnetic separation in Examples 1 to 8.

This international application is based upon and claims priority to Japanese Patent Application No. 2022-170534, filed on October 25, 2022, the entire contents of Japanese Patent Application No. 2022-170534 are incorporated herein by reference.

## Claims

1. A method for recovering valuable materials from lithium ion secondary batteries, the method comprising:
a heat-treatment step of performing a heat treatment on a lithium ion secondary battery to obtain a heat-treated product;
a first classification step of classifying a crushed product, which is obtained by crushing the heat-treated product, to obtain a coarse-particle product 1 and a small-particle product;
a second classification step of classifying a ground product, which is obtained by grinding the small-particle product, at a classification point smaller than a classification point of the first classification step to obtain a coarse-particle product 2 and a fine-particle product;
a first magnetic separation step of subjecting the fine-particle product obtained in the second classification step to magnetic separation to obtain a magnetic component 1 and a non-magnetic component 1;
a second magnetic separation step of subjecting the non-magnetic component 1 obtained in the first magnetic separation step to magnetic separation to obtain a magnetic component 2 and a non-magnetic component 2; and
a recovering step of recovering valuable materials from the magnetic component 1 and the magnetic component 2.

2. The method for recovering valuable materials from lithium ion secondary batteries according to claim 1,
wherein the classifying of the first classification step is performed at the classification point of 600 µm or larger and 2,400 µm or smaller.

3. The method for recovering valuable materials from lithium ion secondary batteries according to claim 1 or 2,
wherein the classifying of the second classification step is performed at the classification point of 25 µm or larger and 1,700 µm or smaller.

4. The method for recovering valuable materials from lithium ion secondary batteries according to any one of claims 1 to 3,
wherein a magnetic flux density of the magnetic separation in the first magnetic separation step is 1,000 G or greater and less than 3,000 G, and
a magnetic flux density of the magnetic separation in the second magnetic separation step is 3,000 G or greater and 20,000 G or less.

5. The method for recovering valuable materials from lithium ion secondary batteries according to any one of claims 1 to 4,
wherein a sum of a cobalt content of the non-magnetic component 1 and a nickel content of the non-magnetic component 1 is 30 percent by mass or less.

6. The method for recovering valuable materials from lithium ion secondary batteries according to any one of claims 1 to 5,
wherein a number-weighted average particle diameter of cobalt, nickel, or both included in the non-magnetic component 1 is 50 µm or smaller.

7. The method for recovering valuable materials from lithium ion secondary batteries according to any one of claims 1 to 6,
wherein the magnetic separation of the first magnetic separation step, the magnetic separation of the second magnetic separation step, or both are wet magnetic separation.

8. The method for recovering valuable materials from lithium ion secondary batteries according to claim 7,
wherein the magnetic separation of the second magnetic separation step is wet magnetic separation, and uses a wet high-gradient magnetic separation method.

9. The method for recovering valuable materials from lithium ion secondary batteries according to claim 8,
wherein the magnetic separation of the second magnetic separation step is wet magnetic separation, and the second magnetic separation step further includes feeding slurry of the non-magnetic component to a rotating drum including a magnet.

10. The method for recovering valuable materials from lithium ion secondary batteries according to claim 8 or 9,
wherein the magnetic separation of the second magnetic separation step is wet magnetic separation, and uses a wet drum magnetic separation method, in which a magnet is arranged in a 3 o'clock-direction of a drum, slurry of the non-magnetic component 1 is fed from a 12 o'clock-direction to 2 o'clock-direction of the drum, and the drum is rotated in a counterclockwise direction.

11. The method for recovering valuable materials from lithium ion secondary batteries according to any one of claims 8 to 10,
wherein the second magnetic separation step further includes adding a dispersant to the non-magnetic component 1 obtained in the first magnetic separation step.

12. The method for recovering valuable materials from lithium ion secondary batteries according to any one of claims 1 to 11,
wherein the recovery step further includes washing the magnetic component 1 and the magnetic component 2, and performing solid-liquid separation to recover the valuable materials.

13. The method for recovering valuable materials from lithium ion secondary batteries according to any one of claims 1 to 12,
wherein copper is recovered from the coarse-particle product 2.
